# EUROPÄISCHE PATENTSCHRIFT

(11) **EP 3 680 032 B1**
(45) Veröffentlichungstag und Bekanntmachung des Hinweises auf die Patenterteilung: **30.06.2021**
(21) Anmeldenummer: 20150963.5
(22) Anmeldetag: 09.01.2020
(51) Int. Cl.: B07C 5/36, B65G 47/96

(54) **SORTIERER UND SORTIERVERFAHREN**
SORTER AND SORTING METHOD
DISPOSITIF ET PROCÉDÉ DE TRI

(30) Priorität: 11.01.2019 DE 102019100631
(43) Veröffentlichungstag der Anmeldung: 15.07.2020
(73) Patentinhaber: WIPOTEC GmbH, 67657 Kaiserslautern (DE)
(72) Erfinder: Joachim, Matthias, 66953 Pirmasens (DE); Schulzki, Alexander, 67705 Stelzenberg (DE)
(74) Vertreter: Eder Schieschke & Partner mbB

(56) Entgegenhaltungen:
- EP-A1- 2 163 315
- EP-A2- 0 888 829

## Beschreibung

Die vorliegende Erfindung betrifft einen Sortierer zum Aussortieren von diskreten, vereinzelt bereitgestellten Produkten aus einem Produktstrom.

Bei der industriellen Verarbeitung von diskreten Produkten besteht häufig das Erfordernis, fehlerhafte Produkte aus dem Produktstrom auszusortieren. Aufgrund angestrebter hoher Durchsatzraten muss das Aussortieren möglichst ohne zeitliche Verzögerung der Produktion erfolgen. Bekannt sind hierzu verschiedene Verfahren, bei denen beispielsweise im Produktstrom angeordnete Weichen einzelne Produkte gezielt aus dem Produktstrom herauslenken. Derartige Vorrichtungen sind konstruktiv aufwändig, da sie in den Förderweg eingreifen und währenddessen einen regulären Weitertransport nachfolgender Produkte unter Umständen behindern. Auch der Abtransport der aussortieren Produkte erfordert zusätzliche Transportmittel, die neben weiteren Kosten weiteren konstruktiven Aufwand bedeuten.

Aus der EP 0 888 829 A2 ist eine Vorrichtung zum Sortieren von Stückgut, insbesondere von Schnittholz, bekannt. Dabei wird eine Sortiertrommel gebildet durch eine Vielzahl von Wandelementen, welche gleichmäßig so um eine zentrische Rotationsachse angeordnet sind, dass die von jedem Wandelement gebildete Ebene auch die Rotationsachse enthält und zwei in Umfangsrichtung hintereinander liegende Wandelemente zwischen sich ein Sortierfach zur Aufnahme von Schnittholz ausbilden.

Die EP 2 704 109 A1 beschreibt eine Gebinderücknahmeeinrichtung mit einer Verteilereinrichtung. Ein drehbares Magazin umfasst dabei mehrere um eine zentrische Drehachse angeordnete Segmente, wobei jedes Segment zur Aufnahme eines Gebinde ausgebildet ist und gebildet wird durch jeweils zwei in Umfangsrichtung benachbarte und einander im Bereich der Drehachse unter einem Segmentwinkel schneidende Wandlungen.

Aufgabe der vorliegenden Erfindung ist es, einen Sortierer zur Integration in einen Produktstrom anzubieten, der das Aussortieren diskreter Produkte ohne große Zeitverzögerung ermöglicht und auf einfache Weise auch den Abtransport der aussortierten Produkte sicherstellt.

Die Aufgabe wird gelöst durch einen Sortierer nach Anspruch 1 und ein Verfahren nach Anspruch 10. Weitere vorteilhafte Ausführungsformen ergeben sich aus den Unteransprüchen.

Ein erfindungsgemäßer Sortierer umfasst einen Grundkörper, der um eine Schwenkachse schwenkbar oder auch rotierbar ist. Der Grundkörper umfasst eine Mehrzahl von ebenen Stützflächen, die sich parallel zur Schwenkachse erstrecken und regelmäßig um diese herum angeordnet sind. Die Stützflächen des Grundkörpers bilden somit ein regelmäßiges Prisma mit einer durch das Prismenzentrum laufenden Schwenkachse. Unter einer "regelmäßigen" Anordnung der Anzahl von n Stützflächen ist zu verstehen, dass jede Stützfläche durch Verschwenken des Grundkörpers um die Schwenkachse in eine Position verschwenkbar ist, die vor dem Verschwenken von einer anderen Stützfläche eingenommen wurde. Im Querschnitt bilden die Stützflächen des Grundkörpers ein regelmäßiges Polygon.

Jede der Stützflächen des Grundkörpers ist dazu ausgebildet, in den Förderweg eines Produktstroms hinein- bzw. aus dem Förderweg herausgeschwenkt zu werden. Eine in den Förderweg hineingeschwenkte Stützfläche dient dort als Förderebene, entlang derer einzelne Produkte in einer Förderrichtung gefördert werden. Vorzugsweise schließt eine Stützfläche, welche als Förderebene dient, eine Lücke zwischen einem dem Sortierer vorausgehenden und einem dem Sortierer nachfolgenden Transportband (anstelle eines zu- oder abführenden Transportbandes kommt auch eine Rollenbahn, eine Gleitfläche, ein Kettenförderer oder ein beliebiges anderes Transportmittel in Frage, welches zur Förderung der Produkte geeignet ist). Vom vorausgehenden Transportband kommend gelangt jeweils genau ein Produkt auf die Förderebene bzw. die zugehörige Stützfläche und von dort in im Wesentlichen unveränderter Förderrichtung weiter auf das nachfolgende Transportband, sofern das Produkt nicht aussortiert werden soll. Die in die Förderebene und damit parallel zum Förderweg verschwenkte Stützfläche liegt dabei vorzugsweise auf dem gleichen Höhenniveau wie ein vor- und nachgeschaltetes Transportband, so dass die geförderten Produkte in einer weitgehend kontinuierlichen und vorzugsweise geraden Bewegung in der Förderrichtung über die Stützfläche hinweg gefördert werden können.

Erfindungsgemäß ist der Grundkörper mit seinen darum angeordneten Stützflächen um die Schwenkachse schwenkbar. Im Rahmen einer solchen Schwenkbewegung wird eine Stützfläche, die zunächst in der Förderebene zum Transport von Produkten in Förderrichtung diente, aus dem Förderweg herausgeschwenkt, während eine an die Stützfläche angrenzende weitere Stützfläche ihrerseits in den Förderweg hineingeschwenkt wird und nun als neue Förderebene dient. Befindet sich ein auszusortierendes Produkt in der von einer der Stützflächen gebildeten Förderebene, so gelangt dieses Produkt beim Verschwenken des Grundkörpers gemeinsam mit seiner Stützfläche aus dem Förderweg heraus auf einen von der Förderrichtung abweichenden Aussortierweg. Während das auszusortierende Produkt gemeinsam mit seiner Stützfläche aus dem Förderweg herausgeschwenkt wird, gelangt eine nachfolgende Stützfläche als neue Förderebene in den Förderweg, um ein weiteres Produkt aufnehmen und gegebenenfalls aussortieren zu können.

Der Drehsinn des Grundkörpers wird vorzugsweise so gewählt, dass die das Produkt aufnehmende Stützfläche zu Beginn des Verschwenkens in die gleiche Richtung bewegt wird, in der die Produkte der Stützfläche zugeführt werden.

Der Vorteil eines solchen Sortierers liegt unter anderem darin, dass - anders als im Stand der Technik - keine Hin- und Herbewegung eines die Aussortierung bewirkenden Umlenkers erforderlich ist, der nach einem erfolgreichen Aussortiervorgang wieder in eine Ausgangslage zurückbewegt werden müsste. Stattdessen wird das auszusortierende Produkt mitsamt seiner Stützfläche aus dem Förderweg herausbewegt und im gleichen Zuge wird eine weitere Stützfläche des Grundkörpers als neue Förderebene in den Förderweg hineingeschwenkt. Ein Aussortiervorgang kann so sehr schnell erfolgen.

Grundsätzlich ist der Sortierer dazu ausgebildet, eine bestimmte Schwenklage zumindest so lange beizubehalten, bis ein auszusortierendes Produkt auf der die Förderebene bildenden Stützfläche ausreichend sicher oder stabil aufliegt, um auf erfindungsgemäße Weise aussortiert zu werden. Sofern das dem Produkt nachfolgende nächste Produkt nicht auszusortieren ist, erfolgt das Aussortieren des relevanten Produktes durch einmaliges Verschwenken des Grundkörpers in der zuvor beschriebenen Weise. Die als neue Förderebene in den Förderweg verschwenkte nächste Stützfläche bleibt zur Weiterförderung regulärer Produkte so lange in dieser Position, bis ein weiteres auszusortierendes Produkt auf ihr eintrifft. Nicht auszusortierende (reguläre) Produkte werden entlang der Stützfläche gefördert und verlassen diese in Förderrichtung, ohne dass der Grundkörper verschwenkt wird.

Der Schwenkwinkel a, um den der Grundkörper für einen Aussortiervorgang zu verschwenken ist, hängt von der Anzahl n der Sortierflächen des Grundkörpers ab nach der Formel α = 360° / n. Theoretisch kann der Schwenkwinkel auch ein Mehrfaches des vorgenannten Winkels α betragen. In diesem Fall gelangt beim Verschwenken nicht die in Umfangsrichtung unmittelbar nachfolgende Stützfläche in den Förderweg, sondern eine andere.

Zweckmäßigerweise ist die Anzahl der Stützflächen begrenzt auf nicht mehr als vier, vorzugsweise drei. Ein erfindungsgemäßer Grundkörper mit drei Stützflächen bildet im Querschnitt ein gleichseitiges Dreieck um die im Zentrum liegende Schwenkachse. Ein Verschwenken des Grundkörpers zum Aussortieren eines Produkts erfolgt dann vorzugsweise um einen Schwenkwinkel α = 120°, so dass die in Umfangsrichtung nachfolgende Stützfläche dann in den Förderweg hineingeschwenkt wird und zur Aufnahme eines weiteren Produktes bereitsteht. Denkbar ist auch ein Grundkörper mit nur zwei Stützflächen, die zueinander parallel sind und gemeinsam um eine dazwischen liegende Schwenkachse schwenkbar sind. Hier wäre der zum Aussortieren erforderliche Schwenkwinkel 180°, so dass eine zunächst in den Förderweg hineingeschwenkte erste Stützfläche nach einem Aussortiervorgang um 180° geschwenkt unter der zweiten Stützfläche zu liegen kommt, die dann ihrerseits im Förderweg für die Aufnahme eines weiteren Produktes bereitsteht. Sofern die geometrischen Bedingungen der Einbausituation es erlauben, kann die Anzahl n der Stützflächen auch größer als vier gewählt werden.

An die jeweilige Stützfläche angrenzende, bevorzugt ebene Zuführ- oder Abführmittel bzw. -ebenen fluchten vorzugsweise mit der Stützfläche, um einen sanften Übergang der Produkte zu gewährleisten. Die Anordnung aus Stützfläche, Zuführ- und Abführebene kann genau horizontal oder auch unter einem geringen Neigungswinkel verlaufen, so dass die Schwerkraft jedenfalls nicht dazu ausreicht, das Produkt relativ zur Stützfläche zu bewegen. Ein der Förderebene zugeführtes Produkt liegt dann frei auf der in der Förderebene angeordneten Stützfläche auf, die zugleich die räumlich oberste Stützfläche des Grundkörpers bildet. Vorzugsweise verläuft die Schwenkachse des erfindungsgemäßen Sortierers horizontal. Bei dieser Anordnung wird das Aussortieren eines Produktes durch die Schwerkraft folgendermaßen unterstützt: Beim Verschwenken des Grundkörpers wird die zunächst nahezu horizontale oberste Stützfläche mit dem darauf aufliegenden Produkt geneigt. Die in Schwenkrichtung gesehen vordere Kante der Stützfläche senkt sich nach unten ab, während das rückwärtige Ende der Stützfläche sich zunächst etwas über die gedachte Förderebene hinaus nach oben bewegt. Dieses temporär aufragende hintere Ende der Stützfläche "hintergreift" das auszusortierende Produkt rückwärtig, während die Stützfläche aus dem Förderweg herabgeschwenkt wird. Dadurch kann das Produkt, je nach Rotationsgeschwindigkeit ω um die Schwenkachse, auf seinem Aussortierweg noch beschleunigt werden, um es möglichst schnell auszusortieren und beispielsweise in einen räumlich definierten Bereich unterhalb der Förderebene bzw. des Förderweges herabzuschleudern und/oder in einen Behälter einzuwerfen. Auch verschiedene Aussortierwege oder Flugbahnen für die auszusortierenden Produkte lassen sich durch Wahl der Schwenk- und Transportparameter einstellen, um bspw. in unterschiedliche Behälter aussortieren zu können.

Die jeweils in die Förderebene hineingeschwenkte Stützfläche kann in einer einfachsten Ausführungsform als Gleitfläche oder Rollenbahn ausgebildet sein, worauf die zu fördernden Produkte entlanggleiten bzw. -rollen. Diese Ausführungsformen sind konstruktiv besonders einfach und damit kostengünstig. Für den sicheren Transport der Produkte in Förderrichtung oder auch entlang des Aussortierweges muss jedoch dafür Sorge getragen werden, dass die Produkte die Stützfläche mit einer Mindestgeschwindigkeit erreichen, die eine Weiterförderung des Produkts in Förderrichtung oder auch auf den Aussortierweg garantieren.

Eine vorteilhafte Ausführungsform der Erfindung hingegen sieht vor, dass zumindest entlang der als Förderebene dienenden Stützfläche ein antreibbares Transportmittel vorgesehen ist, um ein auf der Förderebene aufliegendes Produkt in die Förderrichtung oder entlang eines von der Förderrichtung abweichenden Aussortierweges aktiv weiterzufördern. Ein solches angetriebenes Transportmittel stellt die Weiterförderung der Produkte besonders gut sicher. Soll ein in der Förderebene angekommenes Produkt nicht aussortiert werden (der Grundkörper wird also nicht verschwenkt), so gewährleistet ein angetriebenes Transportmittel entlang der Förderebene, dass das Produkt sicher in Förderrichtung weiterbewegt wird.

Auch im Fall des Verschwenkens unterstützt ein antreibbares Transportmittel entlang der jeweiligen Stützfläche die Weiterbewegung des auszusortierenden Produktes auf den Aussortierweg. Insbesondere kann es sich bei dem antreibbaren Transportmittel um ein Förderband handeln, welches den Grundkörper L umläuft und zumindest auf der Förderebene, vorzugsweise aber auf allen Stützflächen des Grundkörpers entlangläuft. Das Förderband überstreicht dann die unmittelbar darunterliegenden Stützflächen, so dass ein in der Förderebene auf dem Förderband aufliegendes Produkt gut abgestützt wird.

Ein solcher Sortierer ist vorzugsweise dazu ausgelegt, dass das Förderband um den Grundkörper bzw. um dessen Schwenkachse herum entlang der einzelnen Stützflächen bewegt wird. Dies erfolgt vorzugsweise mit derselben Fördergeschwindigkeit V, mit der die Produkte der in der Förderebene angeordneten Stützfläche zugeführt bzw. von dieser abgeführt werden. Ein Produkt, welches nicht aussortiert werden soll, wird in diesem Fall mit nahezu konstanter Geschwindigkeit von einem Zuführband auf das Förderband übergeben, welches die in der Förderebene angeordnete Stützfläche überstreicht. Ein stromabwärts in Förderrichtung an die Stützfläche anschließendes weiteres Förderband, welches vorzugsweise ebenfalls mit der genannten Geschwindigkeit V betrieben wird, gewährleistet den ruckfreien Transport des Produkts in Förderrichtung über den Grundkörper hinweg.

Ein den Grundkörper umlaufendes Förderband ist auch vorteilhaft für das Aussortieren von Produkten, da ein auszusortierendes Produkt auch während des Verschwenkens des Grundkörpers noch so lange vom Förderband angetrieben wird, wie es entlang seines Aussortierweges auf dem Förderband aufliegt. Um das Förderband von einer auf die in Umfangsrichtung daran angrenzende nächste Stützfläche umzulenken, ist nach einer vorteilhaften Ausführungsform der Erfindung vorgesehen, angetriebene oder antriebsfreie Umlenkrollen vorzusehen dort, wo zwei Stützflächen aneinandergrenzen.

Das Förderband kann in unterschiedlicher Weise angetrieben werden. Eine erste Ausführungsform sieht vor, dass wenigstens eine der zuvor genannten Umlenkrollen an den Grenzbereichen zwischen benachbarten Stützflächen angetrieben ist, um das durch die Rollen umgelenkte Förderband gleichzeitig um den Grundkörper herum anzutreiben. Dies kann über eine oder auch mehrere bzw. alle Umlenkrollen erfolgen, die aus Symmetriegründen zweckmäßigerweise in gleicher Anzahl vorgesehen sind wie die Stützflächen und jeweils dort angeordnet sind, wo die Stützflächen aneinandergrenzen. Anstelle von angetriebenen oder nicht-angetriebenen Umlenkrollen kann eine Stützfläche über einen geeigneten Biegeradius auch nahtlos in die benachbarte nächste Stützfläche übergehen, so dass der Grundkörper eine geschlossene Umfangsfläche aufweist.

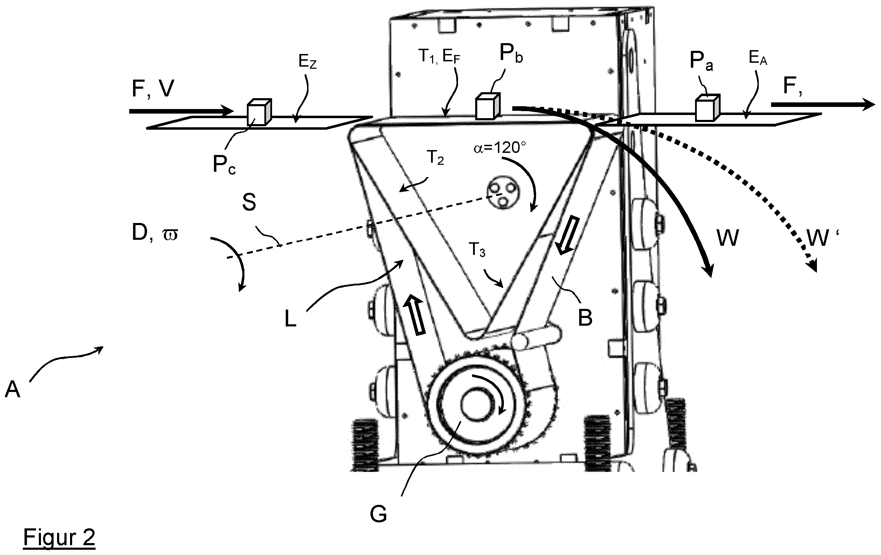

Eine alternative Ausführungsform für den Antrieb eines Förderbandes sieht vor, dass das Band über eine außerhalb des Grundkörpers angeordnete Treibrolle geführt wird. Das Band liegt auch in diesem Fall zumindest auf der jeweils in der Förderebene positionierten Stützfläche vollflächig auf, so dass es während des Transports eines Produktes dort gut unterstützt wird. Die aus dem Förderweg herausgeschwenkten anderen Stützflächen des Grundkörpers müssen nicht zwingend unmittelbar vom Förderband beaufschlagt werden. Stattdessen kann das Band auf der von der Förderebene abgewandten Seite des Grundkörpers von den dortigen Stützflächen weggeführt und um die genannte Antriebsrolle geleitet werden (siehe insbesondere Fig. 2). Diese Art des Bandantriebs ist konstruktiv etwas einfacher realisierbar als die vorgenannte Lösung mit angetriebenen Umlenkrollen. Diese müssen nämlich über einen innerhalb des Grundkörpers angeordneten Antriebsmechanismus zur Rotation angetrieben werden. Das Band kann über einen Traktorantrieb angetrieben werden, bei dem regelmäßig um eine Antriebsachse angeordnete Mitnehmer in komplementäre Aussparungen des Bandes, vorzugsweise an dessen Randbereich, eingreifen.

Da sich die angetriebenen Umlenkrollen beim Verschwenken des Grundkörpers mit diesem in Umfangsrichtung um die Schwenkachse herum bewegen, addieren sich bei dieser Variante die Bewegungen des Bandes beim Verschwenken zu denen des Grundkörpers, was in der Verfahrenssteuerung zu berücksichtigen ist. Liegt die Antriebsrolle dagegen außerhalb des Grundkörpers, kann die Bandgeschwindigkeit unabhängig von der Winkelgeschwindigkeit des Schwenkkörpers eingestellt bzw. beibehalten werden.

Nach einer vorteilhaften Ausführungsform der Erfindung ist ein Schwenkantrieb vorgesehen, der das automatische Verschwenken des Grundkörpers um die Schwenkachse, vorzugsweise gesteuert durch eine übergeordnete Steuereinheit, ermöglicht. Die Steuereinheit kann ferner dazu ausgebildet sein, die Bandgeschwindigkeit eines um den Grundkörper herum geführten Transportbandes zu steuern, und bei der Steuerung kann der jeweilige aktuelle Schwenkwinkel des Grundkörpers mit berücksichtigt werden. Das Förderband kann während des Verschwenkens mit der Fördergeschwindigkeit oder einer davon abweichenden Geschwindigkeit angetrieben werden, und auch die Winkelgeschwindigkeit ( 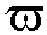 ), mit welcher der Grundkörper um die Schwenkachse rotiert wird, kann vorzugsweise nach einer vorgebbaren Funktion veränderlich sein, um die Förderung eines nicht auszusortierenden Produktes und insbesondere die Bewegung eines auszusortierenden Produktes entlang eines Aussortierweges flexibel einstellen bzw. vorgeben zu können.

Ein Verfahren zum Aussortieren von diskreten Gütern unter Nutzung eines Sortierers der vorgenannten Art zeichnet sich unter anderem dadurch aus, dass das Verschwenken des Grundkörpers stets im gleichen Drehsinn um die Schwenkachse erfolgen kann, ein Vor- und Zurückschwenken ist nicht erforderlich. Der Umstand, dass eine aus der Förderebene herausgeschwenkte Stützfläche durch die in Umfangsrichtung daran anschließende nachfolgende Stützfläche als neue Förderebene ersetzt wird, ermöglicht so ein sehr zügiges Aussortieren.

Der erfindungsgemäße Sortierer lässt sich integrieren in eine Förderanlage, vorzugsweise mit einer stromabwärts an den Sortierer angrenzenden Abführeinheit. Dann sind reguläre Produkte von der Förderebene des Sortierers einer Abführförderebene der Abführeinheit zuführbar, wobei die Förderebene und die Abführförderebene vorzugsweise fluchten, so dass ein absatzloser Übergang des Produktes von der Förderebene auf die Abführförderebene möglich ist. Auszusortierende Produkte werden vor Erreichen der Abführförderebene durch Verschwenken des Grundkörpers ausgeschleust. Der erfindungsgemäße Sortierer ist bevorzugt dazu ausgebildet, einzelne Produkte zu fördern bzw. auszusortieren. Dabei kann es sich um vereinzelte Produkte handeln in dem Sinne, dass jeweils genau ein Produkt dem Sortierer zugeführt und von diesem weitergefördert bzw. aussortiert wird. Dankbar ist aber auch der Fall, dass eine Gruppe von Produkten der Förderebene des Sortierers gemeinsam zugeführt wird, wenn ein Kriterium zum Aussortieren bzw. Weiterfördern die ganze Produktgruppe betrifft, also alle Produkte der Gruppe gleichzeitig aussortiert oder weitergefördert werden sollen. Die in dieser Anmeldung erläuterten Verhältnisse betreffend ein einzelnes Produkt gelten für die Gruppe entsprechend.

Der erfindungsgemäße Sortierer kann Teil einer Inspektionsvorrichtung sein, die eine Waage und/oder eine Röntgeninspektionseinheit umfasst. Er ist besonders geeignet für Systeme mit besonderen Hygieneanforderungen, wie bspw. in der Lebensmittelverarbeitung, da er aufgrund einfacher Bauweise leicht zu reinigen ist

Die Erfindung soll nachstehend anhand eines Figurenbeispiels näher erläutert werden. Dabei zeigt
- Fig. 1: eine perspektivische Seitenansicht eines Sortierers in vereinfachter Darstellung, und
- Fig. 2: eine abgewandelte Ausführungsform des Sortierers mit Antrieb eines Transportbandes außerhalb des Grundkörpers.

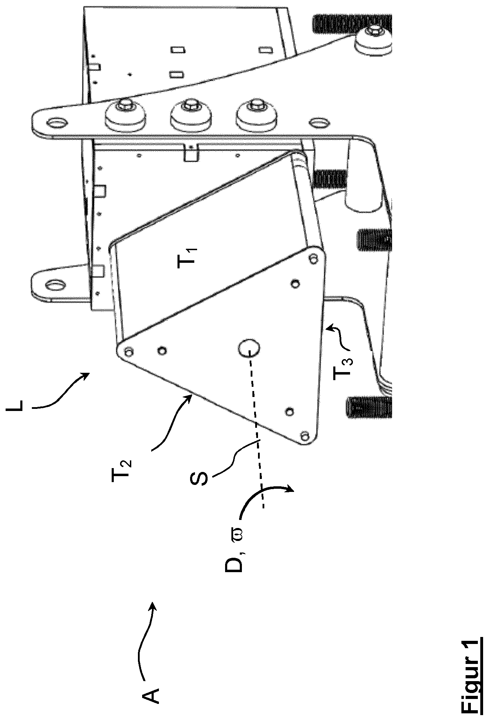

Fig. 1 zeigt einen erfindungsgemäßen Sortierer A, der zur Integration in eine in Fig. 2 angedeutete Förderstrecke geeignet ist. Der Sortierer umfasst insbesondere einen Grundkörper L, der um eine zentrisch zum Grundkörper L angeordnete, horizontal ausgerichtete Schwenkachse S schwenkbar ist.

Im Schnitt quer zur Schwenkachse S hat der Grundkörper L die Kontur eines gleichseitigen Dreiecks, wobei jede Seite gebildet wird durch jeweils eine Stützfläche T₁, T₂ und T₃. Der Grundkörper L ist so um die Schwenkachse S verschwenkbar, dass jede der Stützflächen T₁ bis T₃ die Oberseite des dreieckigen Grundkörpers L und damit eine Förderebene bildet, der ein auszusortierendes oder weiterzuförderndes Produkt zugeführt werden kann (Fig. 1 zeigt den Grundkörper L in einer anderen Drehlage. Durch Verschwenken des Grundkörpers um 60° im gezeigten Drehsinn D würde die Stützfläche T₂ die vorbeschriebene Förderebene bilden).

In der Ausführungsform gemäß Fig. 1 sind die Stützflächen T₁ bis T₃ als reibungsarme Gleitflächen ausgebildet, auf denen ein Produkt unter geringem Reibungswiderstand entlanggleiten kann. Durch Verschwenken des Grundkörpers L um die Schwenkachse S wird ein auf einer obersten Stützfläche aufliegendes Produkt aus der Förderebene herausbewegt, sodass es der Schwerkraft folgend an seiner jeweiligen Stützfläche entlang herabgleiten und von dort in einen nicht näher dargestellten Aussortierbehälter hineinfallen kann.

Fig. 2 zeigt eine abgewandelte Ausführungsform eines erfindungsgemäßen Sortierers A. Auch hier wird der (geöffnet dargestellte) Grundkörper L gebildet durch drei Stützflächen T₁ bis T₃, die nach Art eines gleichseitigen Prismas regelmäßig um die Schwenkachse S angeordnet sind. Über einen nicht näher dargestellten Antrieb ist der Grundkörper L so um die Schwenkachse D verschwenkbar, dass jeweils eine der Stützflächen T₁ bis T₃ eine obere, vorzugsweise horizontale Ausrichtung einnimmt, in welcher die jeweilige Stützfläche in einer gedachten Förderebene E_{F} zu liegen kommt.

Die Förderebene E_{F} liegt vorzugsweise auf dem gleichen Höhenniveau wie eine schematisch dargestellte Zuführebene E_{z} und eine Abführebene E_{A}. Aufeinander folgend werden einzelne Produkte Pₐ, P_{b}, P_{c} in einer Förderrichtung F von der Zuführebene E_{z} über die Förderebene E_{F} in die Abführebene E_{A} gefördert, um von dort einer weiteren Verarbeitung zugeführt zu werden. In der Zuführebene E_{z} und/oder der Abführebene E_{A} können Fördermittel wie bspw. Förderbänder vorgesehen sein, um den Transport der Produkte zu bewirken oder zu unterstützen. In der vereinfachten Ansicht gemäß Fig. 2 sind diese Fördermittel nicht dargestellt.

Der Grundkörper L wird von einem Förderband B umlaufen, welches um eine antreibbare Treibrolle G geführt ist. Die Treibrolle G ist auf der der Förderebene E_{F} abgewandten Seite der Schwenkachse S angeordnet. Durch Rotation der Treibrolle G wird das Förderband B um den Grundkörper L herum angetrieben nach Art der beiden dargestellten Richtungspfeile. Dabei überstreicht es die Stützfläche T₁, die aktuell in die Förderebene E_{F} eingeschwenkt ist und das Förderband daher in vertikaler Richtung von unten stützt. Ein von der Zuführebene E_{z} bereitgestelltes Produkt P kann daher mit dem Förderband B entlang der Förderebene E_{F} und in Förderrichtung F weitertransportiert und der Abführebene E_{A} übergeben werden.

Produkte P, die aus dem Produktstrom nicht auszusortieren sind, werden auf diese Weise von der Zuführebene E_{z} bis auf die Abführebene E_{A} weitergeleitet. Der Grundkörper L behält seine Drehlage relativ zu der Führ- und Abführebene dabei unverändert bei. Die Drehgeschwindigkeit der Treibrolle G wird dabei vorzugsweise so gewählt, dass die Geschwindigkeit des Transportbandes B derjenigen Geschwindigkeit V entspricht, mit der die einzelnen Produkte der Förderebene E_{F} zugeführt oder von dieser abgeführt werden. Dies gewährleistet eine ruckfreie Übergabe der Produkte.

Die nach außen gewandten Oberflächen der Stützflächen T₁ bis T₃ sind vorzugsweise reibungsarm ausgebildet, sodass das darauf entlanggleitende Förderband B mit nur geringem Reibungswiderstand angetrieben werden kann.

Gelangt ein aus dem Produktstrom auszusortierendes Produkt (in Fig. 2 bspw. das Produkt P_{B}) in die Förderebene E_{F} und auf das von der aktuellen Stützfläche T₁ dort abgestützte Förderband B, so kann dieses Produkt durch Verschwenken des Grundkörpers L um die Schwenkachse S aussortiert werden. Beim Verschwenken des Grundkörpers L verlässt die das auszusortierende Produkt tragende Stützfläche T₁ die Förderebene E_{F}. Die Stützfläche T₁ neigt sich relativ zur Förderrichtung F, und während sich das rückwärtige Ende der Stützfläche T₁ vorübergehend über die Förderebene E_{F} nach oben heraushebt, senkt sich das vordere Ende der Stützfläche T₁ unter die Förderebene E_{F} und damit auch unter die Abführebene E_{A} herab. In Abhängigkeit der Geschwindigkeit des Förderbandes B und der Schwenkgeschwindigkeit 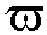 des Grundkörpers L um die Schwenkachse S entsteht zwischen der Stützfläche T₁ und der Abführebene E_{A} ein Spalt, durch den das auszusortierende Produkt P_{B} entlang eines Aussortierweges W aus dem Produktstrom herausbewegt wird.

Durch das Verschwenken des Grundkörpers L um die Schwenkachse S wird nicht nur die oberste Stützfläche T₁ aus der Förderebene herausgeschwenkt, sondern auch die an diese Stützfläche in Umfangsrichtung angrenzende nachfolgende Stützfläche T₂ in die Förderebene E_{F} hereingeschwenkt. Sie übernimmt damit die Funktion der vorher dort angeordneten Stützfläche T₁, um ein dem aussortierten Produkt P_{B} nachfolgendes weiteres Produkt P_{c} aufzunehmen. Dieses nachfolgende Produkt kann, ohne dass der Grundkörper L erneut verschwenkt wird, in Förderrichtung F der Abführebene E_{A} zugeführt werden, indem das Förderband B das Produkt P_{c} entlang der zweiten Stützfläche T_{c} fördert, während der Grundkörper L im Wesentlichen stillsteht. Soll auch das Produkt P_{c} aussortiert werden, wiederholt sich der zuvor beschriebene Schwenkvorgang erneut, das Produkt P_{c} verlässt den Förderweg F entlang des Aussortierweges W und die dritte Stützfläche T₃ erreicht die Förderebene E_{F}.

Die Bewegung eines auszusortierenden Produktes P entlang des Aussortierweges W lässt sich beeinflussen von der Geschwindigkeit des Förderbandes B und der Winkelgeschwindigkeit 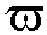 des Grundkörpers L. Eine relativ einfache Verfahrensführung sieht vor, dass die Geschwindigkeit des Förderbandes B konstant gehalten wird und in etwa der Geschwindigkeit V entspricht, mit der die Produkte P dem Sortierer entlang des Förderweges zugeführt bzw. abgeführt werden. Die Winkelgeschwindigkeit 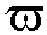 des Grundkörpers L kann während eines Schwenkvorgangs ebenfalls im Wesentlichen konstant gewählt werden.

Bevorzugt wird jedoch die Winkelgeschwindigkeit in Abhängigkeit des Schwenkwinkels vorgegeben, um eine bestimmte Fallkurve des auszusortierenden Produktes festlegen zu können. Vorzugsweise beginnt ein Verschwenkvorgang erst, wenn ein auszusortierendes Produkt über die Hälfte der das Produkt stützenden Stützfläche bewegt wurde. Beginnt der Schwenkvorgang früher, befände sich das Produkt auf demjenigen Abschnitt der Stützfläche, die beim Verschwenken zunächst um ein Maß über die Förderfläche E_{F} nach oben herausgehoben würde, was das auszusortierende Produkt entgegen der Schwerkraftrichtung nach oben beschleunigen würde und einen unkontrollierten Weitertransport verursachen könnte. Hat das auszusortierende Produkt jedoch die in Schwenkrichtung gesehen vordere Hälfte der Stützfläche vor Beginn des Schwenkvorganges erreicht, so kann es beim Verschwenken der sich unter die Förderebene E_{F} herabneigenden vorderen Hälfte der Stützfläche folgen und kontrolliert aussortiert werden.

Die Bandgeschwindigkeit des Förderbandes B und die Winkelgeschwindigkeit 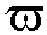 des Grundkörpers L kann darüber hinaus so gewählt werden, dass ein auszusortierendes Produkt eine Beschleunigungskraft erfährt, die von der jeweiligen Stützfläche auf das Produkt ausgeübt wird, wie nachfolgende Überlegung veranschaulicht:

Ein genau oberhalb der Schwenkachse S bzw. in der Mitte der oben liegenden Stützfläche T₁ mit der Geschwindigkeit V in Förderrichtung F bewegtes Produkt P würde aus dieser Position in einer freien, parabelförmigen Flugbahn der Schwerkraft folgen, wäre der Grundkörper L nicht vorhanden. Da er jedoch vorhanden ist, kann die freie Flugbahn nur dann eingehalten werden, wenn das Verschwenken des Grundkörpers L und die Geschwindigkeit des Transportbandes B passend darauf abgestimmt sind. Entsprechend gilt umgekehrt, dass die Bandgeschwindigkeit und die Winkelgeschwindigkeit die Bahn des auszusortierenden Produktes P beeinflussen können, wenn diese Parameter anders eingestellt werden. Beispielsweise könnte die Bandgeschwindigkeit relativ zum Grundkörper L so eingestellt werden, dass das auszusortierende Produkt während des Verschwenkens von dem in Umfangsrichtung hinteren Abschnitt der jeweiligen Stützfläche hintergriffen wird und aus der Drehbewegung des Grundkörpers eine Beschleunigungskraft senkrecht zur Stützfläche T erfährt. Wiederum abhängig von den Parametern 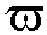 , dem aktuellen Schwenkwinkel und der aktuellen Position des Produktes P entlang der sich verschwenkenden Stützfläche T kann der Punkt bestimmt werden, an dem das Produkt P die sich verschwenkende Stützfläche verlässt. Daraus folgend können unterschiedliche Aussortierwege festgelegt werden, von denen ein Weg W' in Fig. 2 beispielhaft angedeutet ist.

## Patentansprüche

1. Sortierer (A) zum Aussortieren von diskreten Produkten (P), die entlang eines über den Sortierer (A) führenden Förderweges in einer Förderrichtung (F) gefördert werden, der Sortierer umfassend
a) eine Schwenkachse (S), um welche ein Grundkörper (L) des Sortierers (A) schwenkbar ist,
b) wobei der Grundkörper (L) eine Mehrzahl von (n) ebenen Stützflächen (T₁, T₂, ... Tₙ) aufweist, die sich parallel zur Schwenkachse (S) erstrecken und regelmäßig um diese herum angeordnet sind,
c) wobei der Grundkörper (L) so um die Schwenkachse (S) schwenkbar ist, dass wahlweise genau eine der Stützflächen (T₁, T₂, ... Tₙ) in den Förderweg hineingeschwenkt wird und dann parallel zur Förderrichtung (F) verläuft und als Förderebene (E_{F}) dient zur Aufnahme eines dem Sortierer (A) zugeführten Produktes und zu dessen Weiterförderung in der Förderrichtung (F),
**dadurch gekennzeichnet,**
d) **dass** die Stützflächen (T₁, T₂, ... Tₙ) des Grundkörpers (L) ein regelmäßiges Prisma bilden.

2. Sortierer nach Anspruch 1, **dadurch gekennzeichnet, dass** der Sortierer (A) zur Aussortierung eines auf der Förderebene (E_{F}) aufliegenden Produktes (P) aus dem Förderweg ausgebildet ist, indem der Grundkörper (L) um einen Schwenkwinkel (a) oder ein ganzzahliges Vielfaches davon um die Schwenkachse verschwenkt wird, so dass das Produkt (P) auf einen von der Förderrichtung (F) abweichenden Aussortierweg (W) bewegt wird.

3. Sortierer nach Anspruch 2, **dadurch gekennzeichnet, dass** der Schwenkwinkel (a) folgt aus der Bedingung α = 360° / n, wobei ferner gelten soll 1 < n < 5

4. Sortierer nach einem der vorigen Ansprüche, **dadurch gekennzeichnet, dass** durch das Verschwenken des Grundkörpers (L) um einen Schwenkwinkel (a) eine Stützfläche (T₁, T₂, ... Tₙ), welche an die zuvor als Förderebene (E_{F}) dienende Stützfläche (T₁, T₂, ... Tₙ) in Umfangsrichtung angrenzt, als neue Förderebene (E_{F}) in den Förderweg hineingeschwenkt wird.

5. Sortierer nach einem der vorigen Ansprüche, **dadurch gekennzeichnet, dass** zumindest entlang der Förderebene (E_{F}) ein antreibbares Transportmittel vorgesehen ist, um ein auf der Förderebene (E_{F}) aufliegendes Produkt (P) in die Förderrichtung (F) oder entlang eines von der Förderrichtung (F) abweichenden Aussortierweges (W) aktiv weiterzufördern.

6. Sortierer nach dem vorhergehenden Anspruch, **dadurch gekennzeichnet, dass** der Grundkörper (L) von einem angetriebenen Förderband (B) zum Transport der Produkte umlaufen wird, welches zumindest auf der Förderebene (E_{F}), vorzugsweise auf allen Stützflächen (T₁, T₂, ... Tₙ), entlangläuft.

7. Sortierer nach einem der beiden vorhergehenden Ansprüche, **dadurch gekennzeichnet, dass** in jedem Abschnitt, in dem zwei Stützflächen (T₁, T₂, ... Tₙ) in Umfangsrichtung aneinander grenzen, eine beiden Stützflächen (T₁, T₂, ... Tₙ) dienende gemeinsame Umlenkrolle (R₁, R₂... Rₙ) angeordnet ist.

8. Sortierer nach einem der Ansprüche 6 oder 7, **dadurch gekennzeichnet, dass** das Förderband (B) antreibbar ist mittels
a) wenigstens einer antreibbaren Umlenkrolle gemäß Anspruch 7, oder
b) einer parallel zur Schwenkachse (S) ortsfest angeordneten Treibrolle (G), um welche das Förderband (B) auf einer der Förderebene (E_{F}) abgewandten Seite herumgeführt ist, wobei die Treibrolle (G) von der Schwenkachse (S) weiter beabstandet ist als die gedachte Schnittkante der Ebenen, die von zwei benachbarten Stützflächen (T₁, T₂, ... Tₙ) gebildet werden.

9. Sortierer nach einem der vorigen Ansprüche, **dadurch gekennzeichnet, dass** der Grundkörper (L) drei regelmäßig um die Schwenkachse (S) angeordnete und um jeweils 120° zueinander geneigte Stützflächen (T₁, T₂, T₃) aufweist, die von einem von allen Stützflächen (T₁, T₂, T₃) gestützten Förderband (B) umlaufen werden, welches durch wenigstens eine Umlenkrolle (R) angetrieben wird.

10. Verfahren zum Aussortieren von längs eines Förderweges geförderten diskreten Produkten (Pₐ, P_{b}...) aus einem Produktstrom mit einem Sortierer (A) nach einem der Vorrichtungsansprüche 1 bis 9, umfassend folgende Verfahrensschritte:
a) Zuführung eines Produktes (Pₐ) auf die Förderebene (E_{F}) des Sortierers (A) in einer Förderrichtung (F) mit einer Fördergeschwindigkeit (V);
b) Verschwenken des Grundkörpers (L) um die Schwenkachse (S) in einem Drehsinn (D) und mit einer Winkelgeschwindigkeit ( 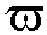 ), um ein einzelnes Produkt (Pₐ) auf einem von der Förderrichtung (F) abweichenden Aussortierweg (W) weiterzufördern.

11. Verfahren nach dem vorhergehenden Anspruch, **dadurch gekennzeichnet, dass** ein dem aussortierten Produkt (Pₐ) nachfolgendes Produkt (P_{b}) einer Stützfläche (T₁, T₂, ... Tₙ) zugeführt wird, welche durch ein vorausgegangenes Verschwenken des Grundkörpers (L) in den Förderweg hineingeschwenkt wurde und dort als neue Förderebene (E_{F}) dient.

12. Verfahren nach einem der beiden vorhergehenden Ansprüche, **dadurch gekennzeichnet, dass** der Grundkörper (L) stets im gleichen Drehsinn (D) verschwenkt wird.

13. Verfahren nach einem der Ansprüche 10 bis 12, **dadurch gekennzeichnet, dass** entlang der Förderebene (E_{F}) ein Abschnitt eines Förderbands (B) verläuft, wobei ein darauf aufliegendes Produkt (P) durch Antreiben des Förderbands (B), vorzugsweise mit der Fördergeschwindigkeit (V), weitergefördert wird
a) in der Förderrichtung (F), wenn das Produkt (P) nicht aussortiert und der Grundkörper (L) daher nicht verschwenkt wird, oder
b) auf einem von der Förderrichtung (F) abweichenden Aussortierweg (W), wenn das Produkt (P) aussortiert wird.

14. Förderanlage, mit wenigstens einem Sortierer (A) nach einem der Ansprüche 1 bis 9, ferner umfassend eine stromabwärts an den Sortierer (A) angrenzende Abführeinheit, wobei Produkte (P) von der Förderebene (E_{F}) des Sortierers einer Abführförderebene (E_{A}) der Abführeinheit zuführbar sind und wobei Förderebene (E_{F}) und Abführförderebene (E_{A}) im Wesentlichen fluchten.

## Claims

1. Sorter (A) for separating out discrete products (P), which are conveyed in a conveying direction (F) along a conveying path leading over the sorter (A), the sorter comprising
a) a swivel axis (S), about which a base body (L) of the sorter (A) can be swivelled,
b) wherein the base body (L) has a plurality of (n) flat support surfaces (T₁, T₂, ... Tₙ), which extend parallel to the swivel axis (S) and are arranged evenly around it,
c) wherein the base body (L) can be swivelled about the swivel axis (S) such that selectively precisely one of the support surfaces (T₁, T₂, ... Tₙ) is swivelled into the conveying path and then runs parallel to the conveying direction (F) and acts as conveying plane (E_{F}) for receiving a product delivered to the sorter (A) and for conveying it further in the conveying direction (F),
**characterized in that**
d) the support surfaces (T₁, T₂, ... Tₙ) of the base body (L) form a regular prism.

2. Sorter according to claim 1, **characterized in that** the sorter (A) for separating out a product (P) lying on the conveying plane (E_{F}) from the conveying path is formed **in that** the base body (L) is swivelled about the swivel axis by a swivel angle (α) or a whole number multiple thereof, with the result that the product (P) is moved onto a separating out path (W) deviating from the conveying direction (F).

3. Sorter according to claim 2, **characterized in that** the swivel angle (α) results from the condition α = 360° / n, wherein the following is further to apply 1 < n < 5.

4. Sorter according to one of the preceding claims, **characterized in that**, by swivelling the base body (L) by a swivel angle (α), a support surface (T₁, T₂, ... Tₙ), which is adjacent in the circumferential direction to the support surface (T₁, T₂, ... Tₙ) previously acting as conveying plane (E_{F}), is swivelled into the conveying path as new conveying plane (E_{F}).

5. Sorter according to one of the preceding claims, **characterized in that** a drivable transport means is provided at least along the conveying plane (E_{F}), in order to actively convey a product (P) lying on the conveying plane (E_{F}) further in the conveying direction (F) or along a separating out path (W) deviating from the conveying direction (F).

6. Sorter according to the previous claim, **characterized in that** a driven conveyor belt (B) for transporting the products, which runs along at least on the conveying plane (E_{F}), preferably on all support surfaces (T₁, T₂, ... Tₙ), circulates around the base body (L).

7. Sorter according to one of the previous two claims, **characterized in that**, in each section in which two support surfaces (T₁, T₂, ... Tₙ) are adjacent to each other in the circumferential direction, a common deflection pulley (R₁, R₂... Rₙ) serving both support surfaces (T₁, T₂, ... Tₙ) is arranged.

8. Sorter according to one of claims 6 or 7, **characterized in that** the conveyor belt (B) can be driven by means of
a) at least one drivable deflection pulley according to claim 7, or
b) a driving pulley (G) arranged fixed in position parallel to the swivel axis (S), around which the conveyor belt (B) is guided on a side facing away from the conveying plane (E_{F}), wherein the driving pulley (G) is spaced further from the swivel axis (S) than the imaginary cut edge of the planes which are formed by two adjacent support surfaces (T₁, T₂, ... Tₙ).

9. Sorter according to one of the preceding claims, **characterized in that** the base body (L) has three support surfaces (T₁, T₂, T₃) arranged evenly around the swivel axis (S) and inclined in each case by 120° relative to each other, around which a conveyor belt (B), which is supported by all support surfaces (T₁, T₂, T₃) and is driven by at least one deflection pulley (R), circulates.

10. Method for separating out discrete products (Pₐ, P_{b}...) conveyed along a conveying path from a product stream with a sorter (A) according to one of device claims 1 to 9, comprising the following method steps:
a) delivering a product (Pₐ) onto the conveying plane (E_{F}) of the sorter (A) in a conveying direction (F) at a conveying speed (V);
b) swivelling the base body (L) about the swivel axis (S) in a direction of rotation (D) and at an angular velocity ( 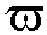 ), in order to convey an individual product (Pₐ) further on a separating out path (W) deviating from the conveying direction (F).

11. Method according to the previous claim, **characterized in that** a product (P_{b}) following the separated-out product (Pₐ) is delivered to a support surface (T₁, T₂, ... Tₙ) which has been swivelled into the conveying path by a previous swivelling of the base body (L) and there acts as new conveying plane (E_{F}).

12. Method according to one of the previous two claims, **characterized in that** the base body (L) is always swivelled in the same direction of rotation (D).

13. Method according to one of claims 10 to 12, **characterized in that** a section of a conveyor belt (B) runs along the conveying plane (E_{F}), wherein a product (P) lying thereon is conveyed further by driving the conveyor belt (B), preferably at the conveying speed (V),
a) in the conveying direction (F), if the product (P) is not separated out and the base body (L) is therefore not swivelled, or
b) on a separating out path (W) deviating from the conveying direction (F), if the product (P) is separated out.

14. Conveyor system with at least one sorter (A) according to one of claims 1 to 9, further comprising an outfeed unit adjacent to the sorter (A) downstream, wherein products (P) can be delivered from the conveying plane (E_{F}) of the sorter to an outfeed conveying plane (E_{A}) of the outfeed unit and wherein conveying plane (E_{F}) and outfeed conveying plane (E_{A}) are substantially aligned.

## Revendications

1. Trieuse (A) permettant de trier des produits (P) discrets qui sont acheminés le long d'un chemin d'acheminement menant à travers la trieuse (A) dans un sens d'acheminement (F), la trieuse comprenant
a) un axe de pivotement (S) autour duquel un corps de base (L) de la trieuse (A) peut pivoter,
b) le corps de base (L) présentant une pluralité de (n) surfaces de support plates (T₁, T₂, ... Tₙ), qui s'étendent parallèlement à l'axe de pivotement (S) et sont disposées de façon régulière autour de celui-ci,
c) le corps de base (L) pouvant pivoter autour de l'axe de pivotement (S) de telle sorte que, sélectivement, précisément l'une des surfaces de support (T₁, T₂, ... Tₙ) est introduite par pivotement dans le chemin d'acheminement puis s'étend parallèlement au sens d'acheminement (F) et sert de plan d'acheminement (E_{F}) pour recevoir un produit amené vers la trieuse (A) et pour l'acheminer ultérieurement dans le sens d'acheminement (F),
**caractérisée en ce**
d) **que** les surfaces de support (T₁, T₂, ... Tₙ) du corps de base (L) forment un prisme régulier.

2. Trieuse selon la revendication 1, **caractérisée en ce que** la trieuse (A) est conçue pour trier un produit (P) se trouvant sur le plan d'acheminement (E_{F}) du chemin d'acheminement en faisant pivoter le corps de base (L) autour de l'axe de pivotement à un angle de pivotement (a) ou un multiple entier de celui-ci, de telle sorte que le produit (P) est déplacé sur un chemin de tri (W) différent du sens d'acheminement (F).

3. Trieuse selon la revendication 2, **caractérisée en ce que** l'angle de pivotement (a) découle de la condition α = 360°/n, où 1 < n < 5 doit également s'appliquer.

4. Trieuse selon l'une des revendications précédentes, **caractérisée en ce que**, suite au pivotement du corps de base (L) à un angle de pivotement (a), une surface de support (T₁, T₂, ... Tₙ), qui est adjacente à la surface de support (T₁, T₂, ... Tₙ) servant auparavant de plan d'acheminement (E_{F}) dans la direction circonférentielle, est introduite par pivotement en tant que nouveau plan d'acheminement (E_{F}) dans le chemin d'acheminement.

5. Trieuse selon l'une des revendications précédentes, **caractérisée en ce qu'**un moyen de transport entraînable est prévu au moins le long du plan d'acheminement (E_{F}) pour acheminer ultérieurement de façon active un produit (P) se trouvant sur le plan d'acheminement (E_{F}) dans le sens d'acheminement (F) ou le long de l'un des chemins de tri (W) différent du sens d'acheminement (F).

6. Trieuse selon la revendication précédente, **caractérisée en ce que** le corps de base (L) est mis en circulation par une bande d'acheminement (B) entraînée pour le transport des produits, laquelle s'étend au moins le long du plan d'acheminement (E_{F}), de préférence sur toutes les surfaces de support (T₁, T₂, ... Tₙ).

7. Trieuse selon l'une des deux revendications précédentes, **caractérisée en ce qu'**une poulie de renvoi (R₁, R₂... Rₙ) desservant communément les deux surfaces de support (T₁, T₂, ... Tₙ) est agencée dans chaque tronçon, où deux surfaces de support (T₁, T₂, ... Tₙ) se rejoignent l'une l'autre dans la direction circonférentielle.

8. Trieuse selon l'une des revendications 6 ou 7, **caractérisée en ce que** la bande d'acheminement (B) peut être entraînée
a) au moyen d'au moins une poulie de renvoi entraînable selon la revendication 7, ou
b) au moyen d'une poulie motrice (G) disposée de manière fixe parallèlement à l'axe de pivotement (S), autour de laquelle la bande d'acheminement (B) est guidée sur un côté opposé au plan d'acheminement (E_{F}), la poulie motrice (G) étant plus espacée de l'axe de pivotement (S) que l'arête de coupe imaginaire des plans qui sont formés par deux surfaces de support (T₁, T₂, ... Tₙ) adjacentes.

9. Trieuse selon l'une des revendications précédentes, **caractérisée en ce que** le corps de base (L) présente trois surfaces de support (T₁, T₂, T₃) régulièrement disposées autour de l'axe de pivotement (S) et inclinées chacune à 120 ° les unes par rapport aux autres et qui sont mises en circulation par une bande d'acheminement (B) supportant toutes les surfaces de support (T₁, T₂, T₃), laquelle bande d'acheminement est entraînée par au moins une poulie de renvoi (R).

10. Procédé permettant de trier des produits (Pₐ, P_{b}...) discrets acheminés le long d'un chemin d'acheminement à partir d'un flux de produits au moyen d'une trieuse (A) selon l'une des revendications 1 à 9 du dispositif, comprenant les étapes de procédé suivantes :
a) amener un produit (Pₐ) sur le plan d'acheminement (E_{F}) de la trieuse (A) dans un sens d'acheminement (F) à une vitesse d'acheminement (V) ;
b) faire pivoter le corps de base (L) autour de l'axe de pivotement (S) dans un sens de rotation (D) et à une vitesse angulaire ( 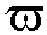 ) afin d'acheminer ultérieurement un seul produit (Pₐ) sur un chemin de tri (W) différent du sens d'acheminement (F).

11. Procédé selon la revendication précédente, **caractérisé en ce qu'**un produit (P_{b}) suivant le produit trié (Pₐ) est amené sur une surface de support (T₁, T₂, ... Tₙ), qui a été introduite par pivotement dans le chemin d'acheminement au moyen d'un pivotement préalable du corps de base (L) et y sert de nouveau plan d'acheminement (E_{F}).

12. Procédé selon l'une des deux revendications précédentes, **caractérisé en ce que** le corps de base (L) pivote toujours dans le même sens de rotation (D).

13. Procédé selon l'une des revendications 10 à 12, **caractérisé en ce qu'**un tronçon d'une bande d'acheminement (B) s'étend le long du plan d'acheminement (E_{F}), un produit (P) reposant sur celui-ci étant acheminé ultérieurement par l'entraînement de la bande d'acheminement (B), de préférence à la vitesse d'acheminement (V),
a) dans le sens d'acheminement (F), lorsque le produit (P) n'est pas trié et que le corps de base (L) n'est donc pas pivoté, ou
b) sur un chemin de tri (W) différent du sens d'acheminement (F) lorsque le produit (P) est trié.

14. Système d'acheminement, comportant au moins une trieuse (A) selon l'une des revendications 1 à 9, comprenant en outre une unité de décharge adjacente à la trieuse (A) en aval, des produits (P) du plan d'acheminement (E_{F}) de la trieuse pouvant être amenés vers un plan d'acheminement de décharge (E_{A}) de l'unité de décharge et un plan d'acheminement (E_{F}) et un plan d'acheminement de décharge (E_{A}) étant essentiellement alignés.
